# EUROPEAN PATENT APPLICATION

(11) **EP 0 952 201 A1**
(43) Date of publication of application: **27.10.1999**
(21) Application number: 99108063.1
(22) Date of filing: 23.04.1999
(51) Int. Cl.: C09K 17/00, A01G 1/04, C05D 9/00

(54) **Organic compost modifier and modified organic compost modified by the same**

(30) Priority: 24.04.1998 JP 12972098
(71) Applicant: CREATERRA INC., Tokyo (JP)
(72) Inventor: Yanagita, Tomotaka c/o Createrra Inc., Setagaya-ku (JP)
(74) Representative: Brown, John David

(57) **Abstract**

An organic compost modifier including at least one salt selected from among iron salts and aluminum salts, and modified organic compost obtained by modifying organic compost with the organic compost modifier. The organic compost is preferably composed of coconut dusts, beaten bark, or sawdust. The organic compost modifier of 0.1 to 5 g is preferably applied to the organic compost of 100 g in dry weight.

## Description

### BACKGROUND OF THE INVENTION

### 1. Field of the Invention

The present invention relates to an organic compost modifier and modified organic compost modified thereby, and more particularly to an organic compost modifier for modifying organic compost into the compost for cultivating plants, which is appropriate for planting trees and flowers, and modified organic compost being modified thereby to be used in the planting fields of civil engineering works such as agriculture, forestry, gardening, and landscape design.

### 2. Background Art

Conventionally, compost to be used for cultivating planting trees and flowers include peat moss, coconut dusts (simple coconut dust, and those containing coconut staple fibers, coconut pericarp chips and the like), tuff loam aggregates, perlite, beaten bark, and sawdust.

Of these, coconut dusts, beaten bark, and sawdust are hard to be biodegraded despite of being organic matters, and have excellent properties such as low repellency in drying state and high water/fertilizer retention capacities, which no other organic material has. On this account, recently, large amount of those materials have been used as compost or compost materials.

However, the compost obtained from the coconut dusts, beaten bark, or the like contains a lot of salt (NaCl), which adversely affects the cultivation of plants. In order to remove the contained salt, the coconut dusts and the like require some treatment of being exposed outdoor over a long period, e.g., 5 to 10 years, or immersed into water. Therefore, the preparation of the compost takes quite long, producing a limit in amount of supply.

Meanwhile, in addition to the aforesaid salt, the compost obtained from the coconut dusts, beaten bark, sawdust, or the like contains a large amount of organic acids such as phenolic acids, which also affect the cultivation of plants. Especially, untreated coconut dusts in about one to two years after harvest contain a great quantity of organic acids, and are inappropriate for the compost for cultivating plants. As well as the aforesaid salt, the organic acids can be removed by treatment of the long-term exposure or the water-immersing. However, there lies a problem of the same sort as in the salt.

Besides, an increase in demanded amount of the composts obtained from the coconut dusts, beaten bark, sawdust, and the like produces a problem in a decreasing supply of long-term-exposed coconut dusts and the like. On this account, it has been desired to prepare compost from a large stock of untreated coconut dusts by simple treatment without the long-term exposure.

The coconut dusts to be used in the present invention are harder to be biodegraded than peat moss that is known as the hardest material to be biodegraded among natural organic matters. However, the biodegradation of the compost by microorganisms causes nitrogen starvation or reduction of the compost itself; therefore, additional suppression of the biodegradability is required.

### SUMMARY OF THE INVENTION

In view of the foregoing problems, an object of the present invention is to provide an organic compost modifier for modifying an organic compost obtained from coconut dusts, beaten bark, sawdust, or the like, which is capable of modifying the compost so as to prevent the adverse effects on the cultivation of plants.

Another object of the present invention is to provide an organic compost modifier for suppressing the biodegradability of the organic compost obtained from the coconut dusts, beaten bark, sawdust, or the like.

Besides, still another object of the present invention is to provide a modified organic compost obtained from coconut dusts, beaten bark, sawdust, or the like; and modified by the aforesaid organic compost modifiers.

As an aspect of the present invention, an organic compost modifier is provided which comprises at least one salt selected from among iron salts and aluminum salts. Here, the organic compost to be modified by the organic compost modifier is preferably of coconut dusts, beaten bark, or sawdust.

By means of the organic compost modifier according to the present invention, the large amount of organic acids contained in the coconut dusts and the like seem to be chemically bonded with the ions in the modifier to be insoluble, thereby enabling the removal of the obstacles to the cultivation of plants. At the same time, the biodegradability of the compost is suppressed.

Besides, cations of the aforesaid metallic salts seem to have displacing effect on sodium ions, which hamper the cultivation of plants, to advance the demineralization.

As another aspect of the present invention, a modified organic compost is provided which is obtained by modifying an organic compost with an organic compost modifier containing at least one salt selected from among iron salts and aluminum salts. Here, the organic compost is preferably of coconut dusts, beaten bark, or sawdust.

Treatment using the organic compost modifier of the present invention eliminates obstacles to the cultivation of plants even in untreated coconut dusts and the like. Here, well-balanced nutrients can be added to obtain modified compost well suitable for cultivating plants.

### DETAILED DESCRIPTION OF THE PREFERRED EMBODIMENTS

A modifier for modifying an organic compost according to the present invention (called "organic compost modifier") comprises at least one type of certain metallic salt. The metallic salt is selected from among iron salts and aluminum salts. Any one of these salts may be used alone, or mixtures thereof may be used. In the present invention, iron salts are preferably used since the resulting modified organic compost treated thereby is wider in available pH range.

Examples of the aforesaid iron salt include ferrous sulfate, ferric sulfate, ferrous chloride, ferric chloride, ferrous nitrate, ferric nitrate, and mixtures thereof. Examples of the aluminum salts include aluminum sulfate, aluminum chloride, and mixtures thereof. Of these, ferrous sulfate and ferric sulfate are preferable. Ferrous sulfate is the most preferable.

Organic compost can be treated with the aforesaid organic compost modifier to be modified into modified organic compost according to the present invention. The organic compost in the present invention is preferably obtained from coconut dusts (simple coconut dust, or those containing coconut staple fibers, coconut pericarp chips and the like), beaten bark, sawdust and the like. As for bark, that of both broadleaf trees and needleleaf trees may be modified by the aforesaid organic compost modifier into the modified organic compost of the present invention. Besides, the modifying effect of the present invention can be obtained in previously demineralized compost materials. Note that, in the present invention, untreated coconut dust means undemineralized coconut dust past no more than one to two years or so after harvest.

In modifying an organic compost with the organic compost modifier of the present invention, the modifier of any form can be used for the treatment. In view of simple treatment processes, that in the form of aqueous solution or powder is preferably used.

The organic compost modifier of the present invention ranges in an applied amount of preferably from 0.1 to 5.0 g, more preferably from 0.3 to 2.0 g, and the most preferably from 0.37 to 0.50 g for 100 g (in dry weight) of the organic compost. At amounts of application smaller than 0.1 g, the organic compost modifier modifies the organic compost incompletely. On the other hand, at amounts of application greater than 5.0 g, the organic compost modifier easily causes a lack of phosphorous components in the organic compost, which is also unpreferable.

In the form of aqueous solution, the organic compost modifier is preferably used at a concentration of from 0.04 to 5% by weight, more preferably from 0.04 to 2% by weight, and the most preferably from 0.06 to 0.2% by weight.

In using the powdered organic compost modifier, an appropriate amount of water is preferably added before, after, or in mixing. The amount of water to be added is not less than 100 ml, and preferably 200 to 300 ml for 100 g of organic compost (in dry weight).

The organic compost modification treatment is performed in such processes as a demineralizing process, modifier adding process, mixing process, water adding process, leaving process, and compressing process. The organic compost modifier may be applied in any of these processes except the compressing process, and is preferably applied before the mixing process. The processes before the mixing process may be performed simultaneously. The demineralizing process may be omitted.

In the modified organic compost of the present invention, plants can be cultivated in the same way as in any conventionally-used compost. Therefore, conventionally-used additives such as natural fertilizers and chemical fertilizers may be added to the modified organic compost of the present invention.

### [EXAMPLES]

Hereinafter, the present invention will be described in more detail in connection with examples thereof. It should be noted that the present invention is not limited thereto.

### [Example 1]

Untreated and undemineralized coconut dusts (15% in water content) were used as the material. 500 g of the coconut dusts was mixed with 18.9 g of (powdered) ferrous sulfate. After 1400 ml of water was added, the mixture was stirred, and left for three days at normal temperatures to obtain coconut dust modified organic compost.

### [Example 2]

Untreated coconut dusts (15% in water content) were demineralized by adding water three times in volume and compressing to obtain demineralized coconut dusts used as the material. 500 g (in dry weight) of the coconut dusts was mixed with 18.9 g of (powdered) ferrous sulfate. After 1660 ml of water was added, the mixture was stirred, and left for three days at normal temperatures to obtain coconut dust modified organic compost.

### [Example 3]

Untreated coconut dusts were heaped up and exposed outdoor for about 10 years so as to be demineralized by rain, and the resultant coconut dusts were used as the material. 500 g of the coconut dusts (15% in water content) was mixed with 18.9 g of (powdered) ferrous sulfate. After 1400 ml of water was added, the mixture was stirred, and left for three days at normal temperatures to obtain coconut dust modified organic compost.

### [Example 4]

Coconut dust modified organic compost was obtained by the same processes as in the example 2 except in that the ferrous sulfate is substituted by 14.3 g of aluminum sulfate.

### [Comparative examples 1 to 3]

For comparison, the material coconut dusts used in the examples 1 to 3 were used without being treated by an organic compost modifier of the present invention.

### [Evaluation test]

Measurements are made on the extracted amounts of phenolic acids (gallic acid, protocatechuic acid, p-hydroxybenzoic acid, vanillic acid, caffeic acid, syringic acid, p-coumalic acid, ferulic acid) contained in the above-obtained coconut dust modified organic composts of the present invention and the coconut dust composts of the comparative examples. The phenolic acids are measured in conformity with the analytical method for soil environment ("Analytical method for soil environment," published by Hakuyusha, (1997), pp.100-104). Table 1 shows the measurements.

**[Table 1]**

| | Extracted amount of phenolic acids (mg/kg) |
|---|---|
| Example 1 | 1000.3 |
| Example 2 | 750.1 |
| Example 3 | 655.3 |
| Example 4 | 825.1 |
| Comparative example 1 | 10849.7 |
| Comparative example 2 | 8051.6 |
| Comparative example 3 | 5029.5 |

As shown in Table 1, the modified organic composts of the examples 1, 2, 3, 4 are remarkably smaller than the corresponding comparative examples 1, 2, 3 in extracted amount of phenolic acids, revealing that the modifications are made to the organic compost materials in the embodiments. This accordingly shows that the organic compost modifiers of the present invention provide excellent effects.

### [Planting test]

The coconut dust modified organic composts of the present invention obtained in the examples 1, 2, 3, and the coconut dust composts of the comparative examples 1, 2, 3 were sampled in dry weight of 60 g, and filled into pots to obtain seedbeds. The seedbeds were planted with *Brassica rapa* ("Komatsuna" in Japanese) as the test plant for a plant cultivating test. The planting period thereof was one month. The cultivation results of the *Brassica rapa* (Komatsuna) were evaluated in weights (total dry weight, dry weight of above-ground parts, and dry weight of underground parts). Table 2 shows the results.

**[Table 2]**

| | Total dry weight (g/pot) | Dry weight of above-ground parts (g/pot) | Dry weight of underground parts (g/pot) |
|---|---|---|---|
| Example 1 | 21.62 | 12.03 | 9.59 |
| Example 2 | 24.47 | 13.62 | 10.85 |
| Example 3 | 26.37 | 14.67 | 11.70 |
| Comparative example 1 | 6.49 | 5.59 | 0.90 |
| Comparative example 2 | 8.63 | 7.34 | 1.29 |
| Comparative example 3 | 15.28 | 10.63 | 5.65 |

As shown in Table 2, the *Brassica rapa* (Komatsuna) planted in the modified organic composts of the examples 1, 2, 3 are remarkably greater than those of the comparative examples 1, 2, 3 in dry weight in any parts. This accordingly shows that the obstacles to the cultivation of plants are removed, and the modified organic composts of the present invention are excellent.

Besides, modified by the organic compost modifiers of the present invention, all of the untreated undemineralized coconut dusts, the demineralized coconut dusts, and the coconut dusts exposed to weather over a long period have brought the *Brassica rapa* (Komatsuna) nearly equally. This shows that the modification by the organic compost modifiers of the present invention enables even untreated and undemineralized coconut dusts to be used as planting compost.

### [Biodegradability test]

In 100 ml vials, 10 g of soil was mixed with 0.3 g of respective coconut dust composts of the examples 1, 2, 3, 4 and of the comparative examples 1, 2, 3. Each of these was adjusted in water content to 50-60% the maximum water retention capacity thereof, and sealed with a rubber cork. The vials were left still in a thermostatic room at a temperature of 30°C. After 21 weeks, for each article the amount of generated carbon dioxide was measured, which indicates the biodegradability thereof. Table 3 shows the obtained measurements.

**[Table 3]**

| | Amount of generated carbon dioxide (CO₂mgC/100g) |
|---|---|
| Example 1 | 405.45 |
| Example 2 | 356.23 |
| Example 3 | 394.42 |
| Example 4 | 416.52 |
| Comparative example 1 | 676.37 |
| Comparative example 2 | 587.65 |
| Comparative example 3 | 625.72 |

Table 3 apparently shows that the modified organic composts according to the present invention are low in amount of generated carbon dioxide, and that the biodegradabilities thereof are suppressed.

While the presently preferred embodiments of the present invention have been shown and described, it will be understood that the present invention is not limited thereto, and that various changes and modifications may be made by those skilled in the art without departing from the scope of the invention as set forth in the appended claims.

The features disclosed in the foregoing description or in the claims may, both separately and in any combination thereof, be material for realising the invention in diverse forms thereof.

## Claims

1. An organic compost modifier comprising at least one salt selected from among iron salts and aluminum salts.

2. The organic compost modifier according to claim 1, wherein an organic compost to be modified by said organic compost modifier is composed of at least one compost selected from the group consisting of coconut dusts, beaten bark, and sawdust.

3. Modified organic compost obtained by modifying organic compost with an organic compost modifier containing at least one salt selected from among iron salts and aluminum salts.

4. The modified organic compost according to claim 3, wherein said organic compost is composed of at least one compost selected by the group consisting of coconut dusts, beaten bark, and sawdust.

5. The modified organic compost according to claim 3 or 4, wherein said organic compost modifier ranges in amount of application from 0.1 to 5 g for said organic compost of 100 g in dry weight.
